Europäisches Patentamt

European Patent Office

Office européen des brevets

(19)

(11) Publication number: **0 120 861**

**B1**

(12) # EUROPEAN PATENT SPECIFICATION

(45) Date of publication of patent specification: **21.01.87**

(51) Int. Cl.⁴: **F 16 B 2/22, F 16 L 3/08**

(21) Application number: **83901263.0**

(22) Date of filing: **18.04.83**

(86) International application number:
**PCT/SE83/00144**

(87) International publication number:
**WO 83/03880 10.11.83 Gazette 83/26**

(54) **A HOLDER.**

(30) Priority: **22.04.82 SE 8202541**

(43) Date of publication of application:
**10.10.84 Bulletin 84/41**

(45) Publication of the grant of the patent:
**21.01.87 Bulletin 87/04**

(84) Designated Contracting States:
**AT BE CH DE FR GB LI NL**

(56) References cited:
**DE-A-2 334 913**
**FR-B-1 286 788**
**FR-B-1 526 230**
**GB-A-2 037 862**

(73) Proprietor: **KARNHAG, Lars Owe**
**Runbovägen 2B**
**S-191 48 Sollentuna (SE)**

(73) Proprietor: **FRANZEN, Per-Olov**
**Björkebyvägen 6**
**S-175 62 Järfälla (SE)**

(72) Inventor: **KARNHAG, Lars Owe**
**Runbovägen 2B**
**S-191 48 Sollentuna (SE)**
Inventor: **FRANZEN, Per-Olov**
**Björkebyvägen 6**
**S-175 62 Järfälla (SE)**

(74) Representative: **Axelsson, Rolf et al**
**Kransell & Wennborg AB Sandhamnsgatan 42**
**S-115 28 Stockholm (SE)**

Courier Press, Leamington Spa, England.

## Description

### Technical Field

The present invention relates to a holder for securing two, elongate objects firmly together, parallel with one another, in a readily detachable manner.

### Background Art

There are many examples where it is necessary to connect two elongate objects together in a manner such that the objects are parallel with one another and cannot be twisted or rotated relative to one another. The connection must be simple to achieve, and it must be possible to separate the objects, one from the other, when desired by a simple hand movement. Ski-sticks are an example requiring the use of such a holder for connecting tubular objects temporarily together in pairs, when transporting the ski-sticks or when displaying the same for sale in sports shops. Corresponding requirements are also found in many other fields, for example within the civil-engineering and electrical-installation fields.

Fittings, and particularly pipe fittings, which include open, stirrup-like holding means and which are arranged to be twisted or rotated relative to the pipe in order to grip and hold the same are known to the art, see DE—A—2 334 913. This specification also proposes to join two such fittings together, for connecting two pipes in a manner such that they extend parallel to one another. To this end, these fittings must be rotatable relative to one another, so that they can be rotated in mutually opposite directions relative to the pipes. Consequently, such fittings cannot be used successively to connect pairs of ski-sticks rigidly together.

### Object of the invention

An object of the present invention is to provide a holder of the kind described, which comprises stirrup-like holding means by means of which two elongate objects can be firmly gripped and rigidly held together in response to a relative rotation of the objects and the holder, in mutually the same direction.

### Summary of the invention

This object is achieved by means of a holder which in accordance with the holder of the above mentioned DE—A—23 34 913 includes four stirrup-like holder means each with a circumferential opening and arranged in axially spaced pairs with respect to the axial direction of the attached elongate objects, the axial distance between the two pairs of said holder means being such as to permit said elongate objects to be passed in between the pairs of said holder means, whereafter said elongate objects can be caused to pass through the openings of said holder means, to be gripped and firmly held thereby, by relative rotation of about 90° between said elongate objects and said holder means, and which according to the present invention is further characterised in that said device further includes a fixed centre piece having non-rotatably connected thereto said four stirrup-like holder means in such a way that the openings of each pair of said holder means face in the same direction, while the openings of the respective pairs of said holder means face in opposite directions, so that said elongate objects can both be attached to the device by relative rotation of about 90° in the same direction.

The stirrup-like holder means are preferably slightly flexible and formed integrally with the centre piece. As a result of this flexibility of the holder means, the cross-dimension of the openings presented thereby can be slightly smaller than the corresponding cross-dimensions of the objects they are intended to hold. On the other hand, the distance between the pairs of stirrup-like holder means is suitably slightly greater than the corresponding cross-dimensions of the objects to be held by said holder. In order to ensure reliable retention of the elongate objects in the holder, the ends of the stirrup-like holder means extend beyond the longitudinal centre plane dividing the spaces enclosed by said holder means.

When the holder is to be used for holding circular-cylindrical objects, the stirrup-like portion of respective holder means suitably has the form of a claw of part-circular cross-section, where the radius of curvature is equal to, or slightly smaller than half the diameter of the objects to be held.

The invention will now be described in more detail, with reference to the accompanying drawing, in which

### Brief description of the drawings

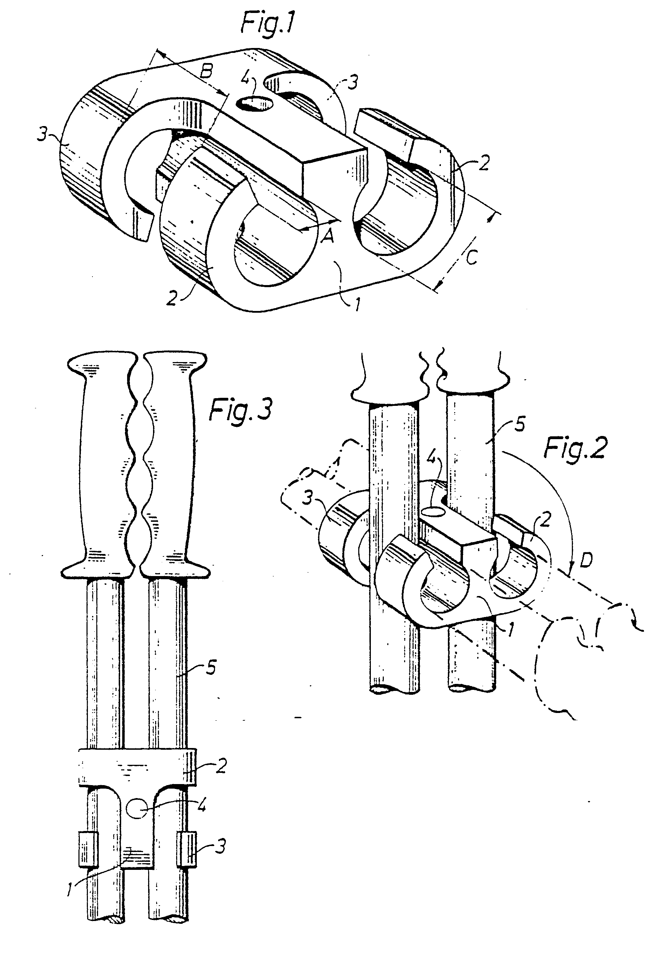

Figure 1 is a perspective view of a holder according to the invention, and

Figures 1 and 3 illustrate one field in which the holder shown in Figure 1 can be applied.

### Description of a preferred embodiment of the invention

The holder illustrated in Figure 1 is fully symmetrical, and includes a centre piece 1, which has arranged at both ends thereof a pair of claw-like holding stirrups 2 and 3, of which the stirrups of one pair face in a direction opposite to that of the stirrup of the other pair. The openings of the stirrups in one pair face in mutually the same direction, while the openings of one pair of stirrups face in a direction opposite to the openings of the other pair of stirrups.

The reference 4 identifies a hole through which a fastener can be passed, for attaching the holder to a support surface, or by means of which the holder can be hung on, for example, a display frame-structure.

The holder illustrated in Figure 1 is particularly intended for firmly connecting together two circular-cylindrical objects, such as pipes, electrical cables or the like, so that the objects lie parallel with one another. The illustrated holder is in the form of a one piece structure of plastics material, and the claw-shaped stirrups 2 and 3 have a certain degree of resiliency. Hence, the smallest cross-measurement A of the stirrup opening can be somewhat smaller than the diameter of the object to be held. The distance B between the pairs of stirrups, however, is suitably somewhat greater than the diameter of the objects to be held, thereby, among other things, to facilitate insertion of the objects into said stirrups, and to permit some variation in the cross-dimensions of the objects. The diameter C of the part-cylindrical space defined by each stirrup is substantially equal to, or slightly smaller than the diameter of the objects to be held. The free ends of the stirrups suitably extend beyond the geometric centre line of the spaces embraced by said stirrups.

Figures 2 and 3 illustrate how a holder according to the invention can be used to hold two ski-sticks 5 together. The ski-sticks are inserted into the space located between the two stirrup pairs 2, 3, this space being somewhat larger than the diameter of the ski-sticks 5, in accordance with the above. The ski-sticks are then rotated through substantially 90°, in mutually the same direction relative to the holder, as indicated by the arrow D. When the sticks cannot be rotated together in this manner, the holder may be rotated relative to the sticks, this being the most suitable procedure in practice. The important factor, however, is that a relative rotation can be achieved between sticks and holder. When the claw-shaped stirrups 2 and 3 are slightly resilient, the opening through which the ski-sticks are intended to pass may narrow and have a smallest cross-dimension which is somewhat smaller than the diameter of the ski-sticks, thereby to provide effective locking of the sticks once they have been snapped into the position shown in chain lines in Figure 2.

Figure 3 illustrates how the ski-sticks are held in the position desired relative to one another, subsequent to rotating the holder in the manner shown in Figure 2. The ski-sticks can be readily transported or stored when held in the illustrated manner, and the holder may also be used for placing ski-sticks on display in a sports shop, in which case a spear-shaped fastener is passed through the hole 4.

As will be understood, the described and illustrated holder may be used in connections other than that of holding two ski-sticks together. For example the holder may be used in civil engineering fields, for holding pairs of pipes together, such as cold and hot water pipes, the holder being screwed to a supporting surface by means of a screw passed through the hole 4. The holder may also be used for permanent or temporary cable installations, as well, for example, as a cable lock, i.e. for locking two cables together, for example when using an extension cable, to obviate the need of tying the ends of cables together, so as to ensure that the male plug is not withdrawn from the female socket. The holder may also be used as a keeper, for securing the end of a coiled cable, or a cable layed or held in some other way. In the case of cables, or other objects, which have flexible or compressible surfaces, the stirrups 2 and 3 may be totally rigid.

In addition to being used for holding circular-cylindrical objects together, the holder may also be used to hold objects of other cross-sectional shapes. In this case the curvature of the stirrups 2 and 3 is adapted to suit the object in question. For particular fields of application, the aforesaid symmetrical construction may be changed to an asymmetrical construction, such that the curvature of the stirrups 2 and 3 on one side of the centre piece is different to that of the stirrups on the other side of said centre piece, so that the holder can be used to connect together two objects of mutually different cross-sections.

In additional to connecting together two loose objects, the holder can also be used to connect an elongate object to a fixed support or the like. As will be understood, the holder may also be used to connect together bundles of objects.

For the purpose of increasing the friction between the stirrups and the objects being held, the inner surfaces of the stirrups may be coated or lined with a friction-increasing substance, or may be provided with friction-increasing means. As will also be understood, the stirrups may have any desired shape, and may optionally be produced as separate elements and subsequently attached to the centre piece, or directly to one another.

## Claims

1. A device for holding two elongate objects (5) firmly together parallel with one another in a readily detachable manner, including four stirrup-like holder means (2, 3) each with a circumferential opening and arranged in axially spaced pairs (2, 2 and 3, 3) with respect to the axial direction of the attached elongate objects, the axial distance (B) between the two pairs of said holder means being such as to permit said elongate objects to be passed in between the pairs of said holder means, whereafter said elongate objects can be caused to pass through the openings of said holder means, to be gripped and firmly held thereby, by relative rotation of about 90° between said elongate objects and said holder means, characterised in that said device further includes a fixed centre piece (1) having non-rotatably connected thereto said four stirrup-like holder means (2, 3) in such a way that the openings of each pair (2, 2 and 3, 3) of said holder means face in the same direction, while the openings of the respective pairs of said holder means face in opposite directions, so that said elongate objects (5) can both be attached to the device by relative rotation of about 90° in the same direction.

2. A device according to Claim 1, characterized in that the stirrup-like holder means (2, 3) are formed in one piece with the centre piece (1).

3. A device according to Claim 1, characterized in that the stirrup-like holder means (2, 3) are slightly flexible.

4. A device according to Claim 3, characterized in that the smallest cross-measurement (A) of the openings of the stirrup-like holder means (2, 3) is slightly smaller than the corresponding cross-measurement of the objects (5) to be held.

5. A device according to any one of Claims 1—4, characterized in that the distance (B) between the pairs of stirrup-like holder means (2, 3) is slightly greater than the corresponding cross-measurement of the objects (5) to be held.

6. A device according to any one of Claims 1—5, characterized in that the ends of the stirrup-like holder means (2, 3) extend beyond the longitudinal centre plane dividing the spaces enclosed by said holder means.

7. A device according to any one of Claims 1—6, intended for securing circular-cylindrical objects, characterized in that the stirrup-like holder means have the form of claws (2, 3) which are part-circular in cross-section and which have a radius of curvature which is equal to or slightly smaller than half the diameter of the objects (5) to be held.

## Patentansprüche

1. Vorrichtung zum festen Zusammenhalten von zwei länglichen Gegenständen (5) in zueinander paralleler und einfach zu trennender Weise mit vier Steigbügel-ähnlichen Haltemitteln (2, 3), von denen jedes eine Umfangsöffnung aufweist und welche bezüglich der axialen Richtung der festgehaltenen länglichen Gegenstände in axial beabstandeten Paaren (2, 2 und 3, 3) angeordnet sind, wobei die axiale Distanz (B) zwischen den zwei Paaren von Haltemitteln derart ist, dass sie erlaubt, jene länglichen Gegenstände zwischen den Paaren von Haltemitteln durchzubewegen, worauf jene länglichen Gegenstände durch Relativverdrehung zwischen jenen länglichen Gegenständen und den Haltemitteln um etwa 90° zum Bewegen durch die Öffnungen jener Haltemitteln veranlasst werden können, um hierdurch ergriffen und festgehalten zu werden, dadurch gekennzeichnet, das jene Vorrichtung ferner ein feststehendes Mittelstück (1) aufweist, mit welchem die vier Steigbügel-ähnlichen Haltemittel (2, 3) in niche-verdrehbarer Weise derartig verbunden sind, dass die Öffnungen eines jeden Paares (2, 2 und 3, 3) dieser Haltemittel in die gleiche Richtung weisen, während die Öffnungen der verschiedenen Paare von Haltemitteln in entgegengesetzte Richtungen weisen, so dass beide länglichen Gegenstände (5) durch eine Relativdrehung um etwa 90° in die gleiche Richtung mit der Vorrichtung verbunden werden können.

2. Vorrichtung nach Anspruch 1, dadurch gekennzeichnet, dass die Steigbügel-ähnlichen Haltemittel (2, 3) mit dem Mittelstück (1) aus einem Stück gebildet sind.

3. Vorrichtung nach Anspruch 1, dadurch gekennzeichnet, dass die Steigbügel-ähnlichen Haltemittel (2, 3) schwach biegsam sind.

4. Vorrichtung nach Anspruch 3, dadurch gekennzeichnet, dass die kleinste Querdimension (A) der Öffnungen der Steigbügel-ähnlichen Haltemittel (2, 3) ein wenig kleiner ist als die entsprechende Querdimension der zu haltenden Gegenstände (5).

5. Vorrichtung nach irgend einem der Ansprüche 1—4, dadurch gekennzeichnet, dass die Distanz (B) zwischen den Paaren von Steigbügel-ähnlichen Haltemitteln (2, 3) ein wenig grösser ist als die entsprechende Querdimension der zu haltenden Gegenstände (5).

6. Vorrichtung nach irgend einem der Ansprüche 1—5, dadurch gekennzeichnet, dass die Enden der Steigbügel-ähnlichen Haltemittel (2, 3) über die längsgerichtete, die von den Haltemitteln umschlossenen Räume teilende Zentralebene hinausragen.

7. Vorrichtung nach irgend einem der Ansprüche 1—6 zum Befestigen von kreis-zylindrischen Gegenständen, dadurch gekennzeichnet, dass die Steigbügel-ähnlichen Haltemittel die Form von Klauen (2, 3) haben, welche im Querschnitt teilkreisförmig sind, und einen Krümmungsradius aufweisen, welcher gleich wie oder ein wenig kleiner als der halbe Durchmesser der zu haltenden Gegenstände (5) ist.

## Revendications

1. Dispositif pour réunir fermement deux objets (5) allongés parallèlement l'un à l'autre de manière aisément détachable, comportant quatre moyens (2, 3) formant attache, du type étrier, ayant chacun une ouverture circonférentielle et disposés par paires espacées axialement (2, 2 et 3, 3) selon la direction axiale des objets allongés attachés, la distance axiale (B) entre les deux paires de moyens formant attache étant telle qu'elle permet aux objets alongés d'être placés entre les paires de moyens formant attache, après quoi les objets allongés peuvent être amenés à passer au travers des ouvertures des moyens formant attache, pourêtre ainsi serrés et fermement maintenus, par une rotation relative d'environ 90° entre les objets allongés et les moyens formant attache, caractérisé en ce que le dispositif comporte en outre une pièce centrale (1) fixe étant reliée de manière non rotative aux quatre moyens formant attache du type étrier (2, 3) de telle façon que les ouvertures de chacune des paires (2, 2 et 3, 3) des moyens formant attache soient orientée dans la même direction, tandis que les ouvertures des paires respectives des moyens formant attache sont orientées dans des directions opposées, de telle façon que les objets allongés (5) peuvent tous deux être attachés au dispositif par une rotation relative d'environ 90° dans la même direction.

2. Dispositif selon la revendication 1, caractérisé en ce que les moyens formant attache du type étrier (2, 3) sont formés d'une seule pièce avec la pièce centrale (1).

3. Dispositif selon la revendication 1, caractérisé en ce que les moyens formant attache du type étrier (2, 3) sont légèrement souples.

4. Dispositif selon la revendication 3, caractérisé en ce que la dimension transversale la plus petite (A) des ouvertures des moyens formant attache du type étrier (2, 3) est légèrement plus petite que la dimension transversale correspondante des objets (5) qui doivent être maintenus.

5. Dispositif selon l'une quelconque des revendications 1 à 4, caractérisé en ce que la distance (B) entre les paires de moyens formant attache du type étrier (2, 3) est légèrement plus grande que la dimension transversale correspondante des objets (5) devant être maintenus.

6. Dispositif selon l'une quelconque des revendications 1 à 5, caractérisé en ce que les extrémités des moyens formant attache du type étrier (2, 3) s'étendent au-delà du plan central longitudinal divisant les espaces enfermé par les moyens formant attache.

7. Dispositif selon l'une quelconque des revendications 1 à 6, prévu pour maintenir des objets cylindriques à section circulaire, caractérisé en ce que les moyens formant attache du type étrier ont la forme de griffes (2, 3) qui sont une partie de cercle en section transversale et qui ont un rayon de courbure égal ou légèrement plus petit que la moitié du diamètre des objets (5) qui doivent être maintenus.

Fig.1

Fig.3

Fig.2